# EUROPÄISCHE PATENTSCHRIFT

(11) **EP 1 378 727 B1**
(45) Veröffentlichungstag und Bekanntmachung des Hinweises auf die Patenterteilung: **16.11.2005**
(21) Anmeldenummer: 03013889.5
(22) Anmeldetag: 20.06.2003
(51) Int. Cl.: G01F 1/66

(54) **Ultraschalldurchflussmesser**
Ultrasound mass flow meter
Débitmètre à ultrasons

(30) Priorität: 04.07.2002 DE 10229925
(43) Veröffentlichungstag der Anmeldung: 07.01.2004
(73) Patentinhaber: SICK Engineering GmbH, 01458 Ottendorf-Okrilla (DE)
(72) Erfinder: Herrmann, Volker, Dr., 01665 Klipphausen (DE); Pfeifer, Günther, Dr., 01237 Dresden (DE)
(74) Vertreter: Ludewigt, Christoph

(56) Entgegenhaltungen:
- DE-A- 10 051 534
- US-A- 4 103 551
- US-A- 4 763 513
- PATENT ABSTRACTS OF JAPAN Bd. 2000, Nr. 15, 6. April 2001 (2001-04-06) & JP 2000 337940 A (TOKICO LTD), 8. Dezember 2000 (2000-12-08) -& JP 2000 337940 A (TOKICO LTD) 8. Dezember 2000 (2000-12-08)

## Beschreibung

Die Erfindung betrifft eine Vorrichtung zum Messen der Strömungsgeschwindigkeit und/oder des Durchflusses eines Fluids gemäß dem Oberbegriff des Anspruchs 1.

Das Messprinzip eines derartigen Ultraschall-Durchflussmessers besteht in einer Detektion einer Laufzeitdifferenz zweier Ultraschallsignale, die einmal eine Komponente in Strömungsrichtung und einmal eine Komponente entgegen der Strömungsrichtung aufweisen. Zur Realisierung des Durchflussmessers nach dem Laufzeitprinzip sind zwei Prinzipien bekannt.

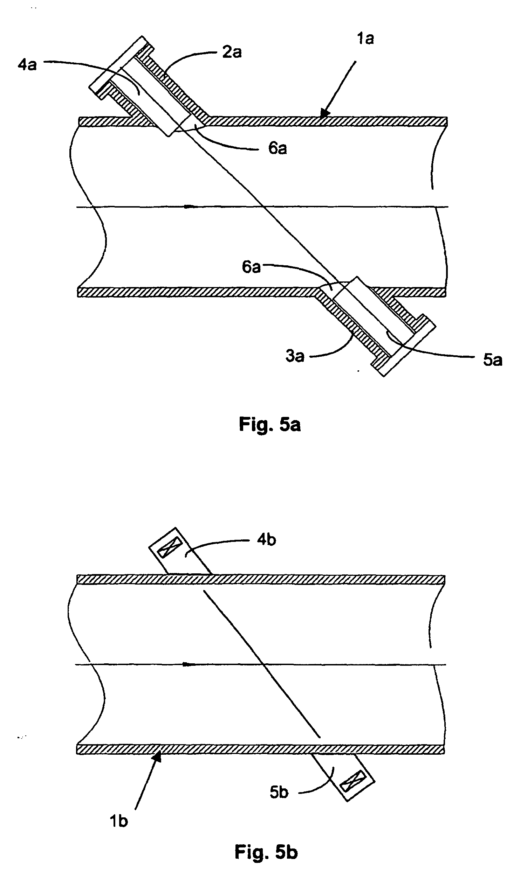

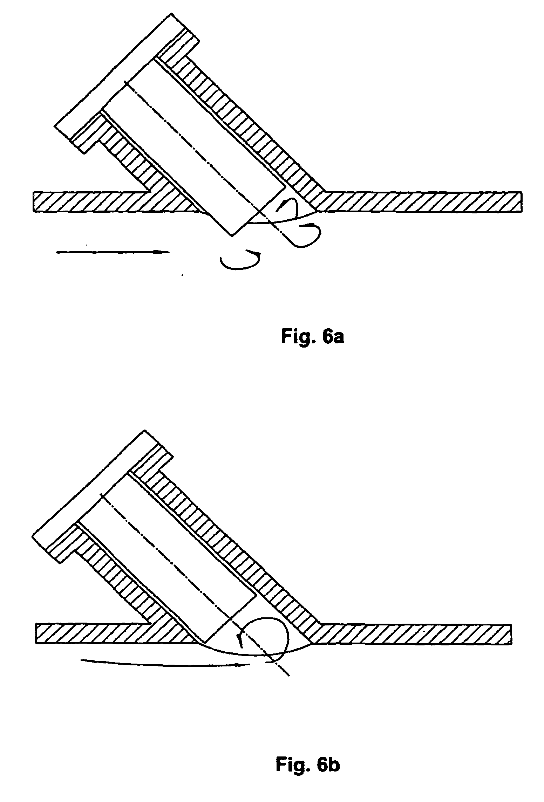

Nach dem einen Prinzip sind die, die Ultraschallsignale erzeugenden Ultraschallwandler, mittels spezieller an das Leitungsrohr 1a angebrachter Adapterflansche 2a und 3a in das Rohr bzw. die Rohrwandung eingesteckt, wie dies in Fig. 5a dargestellt ist. Die Adapterflansche werden entweder eingeschweißt oder sind integrierter Bestandteil des Zählerkörpers, wenn dieser in Gusstechnologie gefertigt wird. Da die Ultraschallwandler 4a und 5a unter einem bestimmten Winkel (üblicherweise 45°) eingebaut werden, entsteht immer eine Kavität 6a, die eine Strömungsstörung darstellt. Diese Störung existiert unabhängig davon, ob der Wandler mittig (Fig. 6a), zurückgezogen (Fig. 6b) oder eintauchend eingesteckt ist. Die sich ausbildenden Wirbel sind nicht vollständig analytisch zu berechnen und sind von stromaufwärts des Durchflussmessers evtl. vorhandenen Vorstörungen der Strömung und der Strömungsgeschwindigkeit (Reynoldszahl) abhängig. Die dadurch entstehenden Fehler werden in der Praxis durch Kalibrierung ermittelt und in Form einer zumeist nichtlinearen Korrekturfunktion hinterlegt. Da bei der Kalibrierung immer nur ein bestimmter Reynoldszahlbereich und eine konkrete Einbausituation abgedeckt werden können, entsteht ein Restfehler bei Variation dieser Bedingungen, die in der Praxis fast immer vorkommen. Weiter ist durch die entstehende Kavität eine Gefahr der Ansammlung von Ablagerungen gegeben, welche die Messgenauigkeit beeinflussen können. Des weiteren ist bei eintauchendem oder mittigem Einbau ein freier Rohrdurchgang nicht gegeben, d. h. eine Molchbarkeit ist nicht gegeben.

Aus der WO 00/43736 ist ein Ultraschalldurchflusszähler bekannt, bei dem die Ultraschallwandler 4b und 5b von Außen auf das Leitungsrohr 1b klemmbar sind, wie dies in Fig. 5b dargestellt ist. Mit Hilfe dieser sogenannten Clamp-on Technik wird versucht, die oben genannten Nachteile zu verringern. Ein weiterer Zweck der Clamp-on Technik ist es, ohne Eingriff in eine existierende Rohrleitung, d.h. ohne Schweiß- und Fremdarbeiten, eine Durchflussmessung durchführen zu können. Die Clamp-on Technik eignet sich in besonderem Maße für zeitweilige Messungen. Bei der Clamp-on Technik erfolgt kein Eingriff in die Rohrleitung 1b und damit keine Störung der Strömung. Sie weist allerdings folgende Nachteile auf: Durch die massive Rohrleitung kann nur wenig Schallenergie eingekoppelt werden. Dies führt zu verringertem Signal-Rauschabstand und damit erhöhter Störanfälligkeit. Zur Ankopplung der Wandler ist ein spezielles Ankoppelmedium, z. B. Silikonfett, erforderlich, dass sich im Laufe der Zeit verändern und somit zu einer Veränderung der Messwertanzeige oder sogar zu einem Ausfall der Messung und damit zu Wartungsproblemen führen kann. Die Rohrdicke ist von Außen nicht mit der nötigen Genauigkeit bestimmbar. Es gibt keine Möglichkeit, die Oberflächenrauigkeit des Rohres, die die Messgenauigkeit beeinflusst, zu bestimmen. Schwankungen in der Rohrdicke führen zu Laufzeitunterschieden und damit zu Genauigkeitseinbußen. Zudem sind die Messpfadlänge und der Winkel nicht mit der Genauigkeit bestimmbar, wie es von der oben beschriebenen Durchflussmessung mit eingeschweißten Adaperflanschen oder Wandleraufnahmen als integraler Bestandteil des Gehäuses bekannt ist. Das Clamp-on Durchflussmessgerät muss vor Ort justiert, parametriert und eingestellt werden. Dadurch verringert sich die Genauigkeit. Zudem wird zu den Einstellarbeiten Personal mit sehr hoher Qualifikation benötigt. Durch eine nicht genau definierbare Abstrahlfläche und zu geringen Energieeintrag können nur Messpfade auf dem Durchmesser realisiert werden. Das bedeutet, dass Messungen entlang außermittigen Pfaden nicht durchgeführt werden können. Die Messung in Clamp-on Technik funktioniert nur bei bestimmten Medien und bei Gasen nur ab einem bestimmten Mindestdruck.

Aus der US 4,103,551 ist bekannt, Ultraschallwandler in speziellen Öffnungen des Leitungsrohres in bekannter Weise einzustecken oder extern nach dem "Clamp-On" Prinzip auf einem Leitungsrohr aussen anzuordnen, mit den oben beschriebenen Nachteilen.

Aus der DE 100 51 534 A1 ist bekannt, einen Sensor, der in einer Ausführungsform ganz allgemein ein Ultraschallsensor sein kann, auf der Außenseite eines Leitungsrohres nach dem "Clamp-On" Prinzip vorzusehen, mit den oben beschriebenen Nachteilen dieser Anordnung.

In der Produktbeschreibung der Firma "Controlotron Clamp-on-Spool System 1010" wird versucht, den Nachteil der Vorortjustage und Einstellung zu verringern. Dazu wird ein Gerät der Clamp-on - Technologie auf ein Rohrstück bereits im Werk aufgeschnallt und eingestellt. Die Rohrdicke ist exakt bestimmbar, jedoch wird sie nicht durch maschinelle Bearbeitung auf ein definiertes, sehr geringes Maß gebracht. Dadurch werden auch die damit verbundenen Nachteile wie Mindestdruck und geringe Signaleinkopplung nicht beseitigt. Mit Ausnahme der Justage können die vorher genannten Nachteile der Clamp-on Technik nicht beseitigt werden. Zudem tritt nach jeder Wartung und jedem Wandlerwechsel auch das Problem der Justage wieder auf, weil die Wandler nicht integraler Bestandteil des Messrohres sind, sondern lediglich an ihr montiert werden.

Aus der JP 2000337940 A ist es bekannt, den die Ultraschallwellen erzeugenden Piezokristall direkt auf den Grund einer in die Rohrwandung eingelassenen Vertiefung anzuordnen. Zwar ist hier die Wandstärke vermutlich genauer bestimmt, aber die anderen vorgenannten Nachteile bleiben bestehen. Letztlich handelt es sich hier ebenfalls um die Clamp-on Technik mit der Besonderheit, dass der Piezokristall direkt auf die Wand aufgebracht ist. Ein einfaches Aufbinden des Piezokristalls auf die Wand erlaubt keine Energieeinkopplung mit akzeptablem Wirkungsgrad. Die Messgenauigkeit wird dadurch nicht verbessert. Der Ultraschall wird in gleicher und eher unkontrollierter Weise durch die Wand geleitet. Die Wand selbst hat für den Ultraschallgeber keine weitere Funktion.

Ausgehend von diesem Stand der Technik ist es Aufgabe der Erfindung, eine verbesserte Messvorrichtung bereitzustellen, mit der die vorgenannten Nachteile vermieden werden können und die insbesondere einen geringeren Wartungsaufwand benötigt, und die eine größere Messgenauigkeit aufweist, wobei es mit der Erfindung bestrebt ist, die von den Durchflussmessern mit eintauchenden Wandlern bekannte Genauigkeit zu behalten, diese bereits im Werk des Herstellers komplett konfigurieren und einstellen zu können und andererseits die mit der Kavität verbundenen Nachteile zu vermeiden.

Diese Aufgabe wird gelöst durch eine Vorrichtung mit den Merkmalen des Anspruchs 1.

Nach der Erfindung weist die Vorrichtung zum Messen der Strömungsgeschwindigkeit und/oder des Durchflusses eines Fluids wenigstens zwei Elemente auf, die den Ultraschall erzeugen bzw. aufnehmen und die an eine Außenseite einer Wandung eines ein Zählergehäuse bildendes Fluid-Leitungsrohres anbringbar sind, wie dies grundsätzlich von der Clamp-on Technik bekannt ist. Erfindungsgemäß bildet im Unterschied zum Stand der Technik ein Teilbereich der Wandung eine den Ultraschall abstrahlende bzw. aufnehmende Membran eines Ultraschallwandlers, wobei zusätzlich der Wandteilbereich dem Ultraschallwandler angepasst dimensioniert ist.

Anders als bei der Clamp-on Technik ist der erfindungsgemäße Ultraschallwandler nicht einfach auf die massive Wand aufgesetzt, sondern ist gewissermaßen zumindest teilweise integraler Bestandteil der Wandung. Aufgrund der Tatsache, dass die Piezokristalle nicht einfach auf die Wand aufgeklebt oder aufgeschnallt werden, sondern die bei bekannten separaten Wandlern verwendeten Elemente eingesetzt werden, wobei die Membran durch den Wandteilbereich gebildet ist, ist mit deren definierter Auslegung das Eigenschaftsspektrum des Ultraschallwandlers in an sich bekannter Weise steuerbar, so dass die gewünschte Genauigkeit erreichbar ist. Der besondere Vorteil der Erfindung liegt also in der Kombination der vorteilhaften Eigenschaften der Clamp-on-Technik (kein Eintauchen in das Messrohr) und der erzielbaren Genauigkeit separater Wandler, die an Öffnungen der Messrohre angeflanscht werden. Die zur Integration des Ultraschallwandlers in die Wand erforderliche Präzisisionsbearbeitung des Wandteilbereichs wird mit Werkzeugmaschinen durchgeführt. Im Ergebnis entsteht ein kompletter Durchflussmesser, in dessen Rohrwandung die Membran des Wandlers integriert ist. Das Messgerät wird komplett im Werk des Herstellers eingerichtet und abgeglichen, so dass diese Arbeiten vor Ort entfallen. Anders als bei der Clamp-on-Technik ist der Durchflussmesser von seinen äußeren Abmaßen und des Handlings kompatibel, verglichen mit konventionellen Ultraschalldurchflussmessem oder Turbinenradmessem.

Da der einen Teil des Ultraschallwandlers bildende Wandteilbereich mit einer definierten Wandstärke und das Rohr mit einer definierten Oberflächenrauigkeit hergestellt wird, ist deren Einfluss auf die Schallübertragung sehr genau definiert. Dadurch können die durch Wandstärkentoleranzen verursachten Laufzeitunterschieden, wie sie bei der Clamp-on Technik auftreten und damit zusammenhängende Genauigkeitseinbußen eliminiert werden.

Die Erfindung kann für die Messung verschiedenster Medien und bei Gasen für die Messung mit verschiedensten Gasdrücken, insbesondere auch bei Umgebungsdruck und großen Nennweiten, eingesetzt werden.

Üblicherweise verwendete Ultraschallwandler, wie sie beispielsweise aus der DE 100 40 344 A1 bekannt sind, bestehen aus einer schallabstrahlenden Membran mit einem Wellenleiter, einer Piezokeramik, einem Gegenschwinger und einer Feder, die die Piezokeramik zwischen Gegenschwinger und Wellenleiter vorspannt. Membran und Wellenleiter werden üblicherweise aus einem Stück hergestellt.

Im Gegensatz dazu ist gemäß der Erfindung die Membran des Wandlers Teil der Wandung des Fluid-Leitungsrohres und damit des Messaufnehmers, wobei die so gebildete Membran durch mechanische Bearbeitung hergestellt werden kann. Die Membran wird vorzugsweise so dimensioniert, dass die schwingende Fläche sehr klein und dünn wird. Die innere Kontur des Rohres bleibt unverändert.

Die so gebildete Membran kann exakt angepasst werden an den Ultraschallwandler, so dass die Eigenschaften des Ultraschallwandlers beeinflussbar sind. Auf diese Weise kann insbesondere die Abstrahlcharakteristik optimiert werden.

In einer vorteilhaften Ausbildung der Erfindung ist der Ultraschallwandler vom Längsschwingertyp und zwischen dem Ultraschall erzeugenden bzw. aufnehmenden Element, also dem Piezokristall und der Membran ist ein Wellenleiter angeordnet. Dies hat den Vorteil, dass der Wellenleiter und der die Membran bildende Wandteilbereich exakt aufeinander ausgebildet werden können, so dass die Ultraschallenergie optimal auf die Membran übertragen wird und letztendlich eine optimale Ultraschallabstrahlung erreicht werden kann.

Für eine optimale Übertragung der Schallenergie von dem Piezokristall über den Wellenleiter auf die Membran, ist der Kontaktbereich zwischen dem Ultraschallwandler und der Wandung formschlüssig, d. h. kugelförmig, ausgebildet. Dadurch ergibt sich eine vorteilhafte Kugelabstrahlcharakteristik.

Da die, die Membran bildende Wandung dünn ausgebildet werden kann, wird die Schallenergie in eine an dieser Stelle weniger massive Rohrleitung eingekoppelt, wodurch mehr Schallenergie eingekoppelt werden kann und was zu einem verbesserten Signal-Rauschabstand und damit verringerter Störanfälligkeit führt.

Wenn die Membran eine in Bezug auf die Wellenlänge des Ultraschalls kleine Ausdehnung hat, kann erreicht werden, dass ein so großer Abstrahlwinkel entsteht, dass ein gegenüberliegender aber ein Stück stromauf- oder stromabwärts angeordneter Wandler noch im Strahlungskegel des Wandlers liegt, obwohl die Abstrahlrichtung senkrecht zur Rohrachse liegt. Dadurch ist der Aufbau des Durchflussmessers erheblich verbessert, da ein senkrechter Anbau der Wandler erheblich präziser zu realisieren ist als ein Anbau in einem anderen Winkel und so vorteilhaft hohe Genauigkeiten, wie sie von Vorrichtungen mit eintauchenden Wandlern bekannt sind, möglich werden.

Durch eine Abdeckung, mit der der in die Wand eingelassene Ultraschallwandler abdeckbar ist und damit von der Umgebung abgekapselt werden kann, ist ein effektiver Schutz des Wandlers gegeben. Die äußeren Baumaße des Zählers verringern sich. Des weiteren verhindert ein solcher Schutz auch eine Alterung eines Kontaktmediums, das zwischen dem die Membran bildenden Teilbereich der Wandung und einem Wellenleiter des Wandlers vorzusehen ist.

In Weiterbildung der Erfindung ist ein Federelement, an den die Membran bildenden Teilbereich der Wandung anpressbar, wobei das Federelement sich vorteilhafterweise an der Abdeckung abstützen kann.

Obwohl die erfindungsgemäßen Wandler durch den senkrechten Anbau in Richtung des Durchmessers abstrahlen, lassen sich aber trotzdem außermittige Messpfade aufspannen, da die Wandler einen Abstrahlkegel mit großer Öffnung ermöglichen. Zusätzlich können bei großem Abstrahlkegel mehr Messpfade aufgespannt werden, da einem Sender mehrere Empfänger zugeordnet sein können. Somit kann die Anzahl der Messpfade größer sein als die Anzahl der Ultraschallwandler dividiert durch zwei.

Im Folgenden wird die Erfindung anhand eines Ausführungsbeispiels unter Bezugnahme auf die Zeichnung im Einzelnen erläutert. In der Zeichnung zeigen:
- Fig. 1: einen Schnitt einer erfindungsgemäßen Vorrichtung in Längsrichtung einer Fluidleitung;
- Fig. 2a: einen Schnitt entlang der Linie II-II aus Fig. 1;
- Fig. 2b: eine Ansichtwie Fig. 2 einer weiteren Ausführungsform;
- Fig. 3a: eine Detailansicht aus Fig. 2;
- Fig. 3b: eine Detailansicht wie Fig. 2 einer weiteren Ausführungsform;
- Fig. 4: Darstellungen von Pfadlagen außerhalb des Durchmessers;
- Fig. 5a, b: Vorrichtungen nach dem Stand der Technik;
- Fig. 6a, b: Wandleranordnungen nach dem Stand der Technik, mittig (Fig. 6a) und zurückgezogen (Fig. 6b).

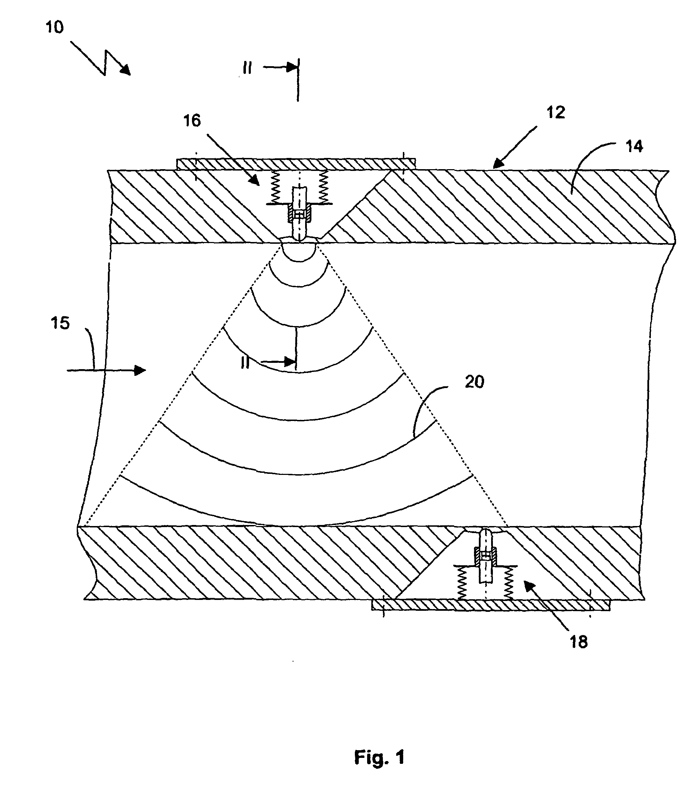

Eine erfindungsgemäße Vorrichtung 10 (Fig.1) zum Messen der Strömungsgeschwindigkeit und/oder des Durchflusses eines Fluids mittels Ultraschall umfasst ein Leitungsrohr 12 für ein in Pfeilrichtung 15 strömendes Fluid, das ein Gas oder eine Flüssigkeit sein kann. In einer Wandung 14 des Leitungsrohres 12 sind zwei Ultraschallwandler 16 und 18 derart angeordnet, dass der jeweils andere in dem Abstrahlungskegel des einen liegt, wobei einer der Wandler 18 stromab des ersten Wandlers 16 angeordnet ist. Ultraschallsignale des Wandlers 16, die beispielsweise durch Wellenfronten 20 dargestellt sind, und die vom Wandler 18 empfangen werden, haben in ihrer Ausbreitungsrichtung eine Komponente in Strömungsrichtung und Ultraschallsignale, die vom Wandler 18 in Richtung des Wandlers 16 ausgesandt werden und die von dem Wandler 16 empfangen werden, haben eine gleichgroße Komponente entgegen der Strömungsrichtung 15, so dass Laufzeitdifferenzen auf Grund der Strömung 15 des Fluids messbar sind.

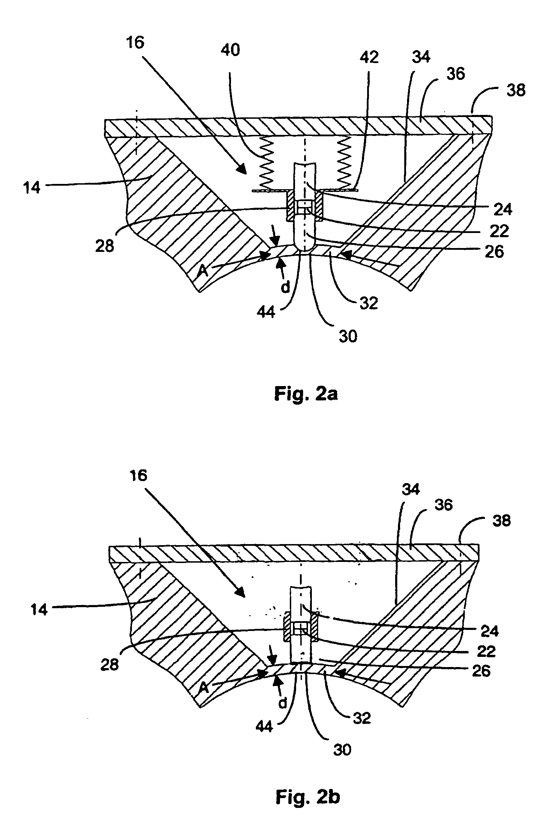

Die erfindungsgemäße Anordnung und Aufbau der Ultraschallwandler 16 und 18 wird im Folgenden an Hand der Fig. 2, die eine Detailansicht der Vorrichtung 10 zeigt, im Folgenden erläutert, wobei der Aufbau nur anhand des einen Wandlers 16 erläutert wird. Es versteht sich, dass weitere Wandler, beispielsweise der in Fig. 1 dargestellte Wandler 18, in analoger Weise erfindungsgemäß ausgebildet und angeordnet sein können.

Der Ultraschallwandler 16 weist in bekannter Weise eine den Ultraschall erzeugende Piezokeramik 22 auf, die zwischen einem Gegenschwinger 24 und einem Wellenleiter 26 angeordnet ist und die über eine Feder 28 vorgespannt zwischen dem Gegenschwinger 24 und dem Wellenleiter 26 gehalten ist. Der Wellenleiter 26 ist an seinem der Piezokeramik 22 entgegengesetztem Ende mit einer Membran 30 in Kontakt, über die die von der Piezokeramik 22 erzeugten Ultraschallwellen, abgestrahlt werden.

Erfindungsgemäß ist die Membran 30 Teil der Wandung 14, wobei ein die Membran 30 bildender Teilbereich 32 der Wandung 14 dadurch erkennbar ist, dass dieser Teilbereich 32 eine erheblich geringerer Wandstärke d als die restliche Wandung 14 aufweist.

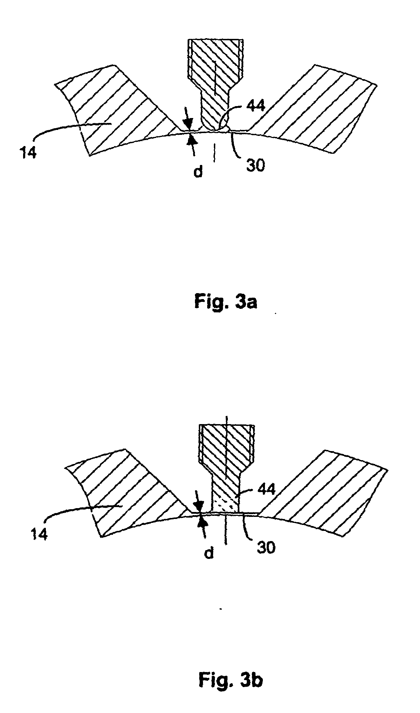

An der Kontaktstelle 44 zwischen dem Wellenleiter 26 und der Membran 30, die formschlüssig, d.h. kugelförmig, ausgebildet ist, wie in den Fig. 2a und 3a zu erkennen ist, ist ein Ankoppelmedium, beispielsweise ein Silikonfett, vorgesehen, damit die Ultraschallenergie optimal in die Membran 30 eingekoppelt werden kann. Auf Grund der relativ kleinen Ausdehnung A der Membran 30 ist die Größe der schallabstrahlenden Fläche, nämlich die Größe der Membran 30, begrenzt, und kann relativ klein ausgebildet sein.

Eine andere Ausführungsform der Ankopplung des Wellenleiters 26 ist in den Fig. 2b und 3b gezeigt. Hierbei wird der Wellenleiter 26 mit der Membran 30 fest verbunden, z. B. durch Scheißen oder Löten, um eine intensivere mechanische Kopplung zu erreichen. Die anderen Wandlerteile 22, 24, 28 werden dann auf das Gewinde des Wellenleiters 26 aufgeschraubt und ergeben so einen kompletten Ultraschallwandler. Eine Abstützung mit Feder 40, 42 ist nicht mehr erforderlich, da der Wellenleiter fest mit der Membran verbunden ist.

Die Fig. 3a und b zeigen Ausführungsformen der Membran 30, deren Dicke d hier noch weiter reduziert ist als die der Fig. 2a und b, wobei nach Fig. 3a die Ankoppelstelle zwischen Wellenleiter 26 und Membran 30 wieder aus einer Kugelkopplung 44 besteht.

Die Membran 30, die einerseits Teil des Wandlers 16 ist und andererseits Teil der Wandung 14 ist, wird durch mechanische Bearbeitung der Wandung 14 hergestellt.

Der Wandler 16 ist in eine Vertiefung 34 eingelassen, wobei der Boden der Vertiefung 34 die Membran 30 bildet. Ein Abdeckelement 36 deckt, wenn die Vertiefung 34 groß genug ist und den Wandler 16 vollständig aufnehmen kann, die Vertiefung 34 mit dem Wandler 16 ab. Die Abdeckung 36 kann über geeignete Befestigungsmittel 38 an der Wandung 14 befestigt werden. Über ein Federelement 40, das sich gegen die Abdeckung 36 abstützt, ist der Wandler 16 mit seinem Wellenleiter 26 gegen die Membran 30 gepresst gehalten. Der Ultraschallwandler muss auf die konkrete Einbausituation abgestimmt werden, um eine optimale Abstrahlung von Schallenergie zu erreichen und möglichst wenig Schallenergie in die Abdeckung 36 und die Wandung 14 zu leiten.

Ein Federelementabstütz- bzw. Halteelement 42, durch das der Wandler 16 mittels des Federelements 40 mit der Abdeckung 36 verbunden ist, ist vorzugsweise in einem Schwingknoten des Ultraschallwandlers 16 angeordnet, wodurch eine Übertragung von Ultraschallschwingungen auf die Abdeckung 36 reduziert ist. Des Weiteren kann das Federelement 40, beispielsweise durch seine geometrische Form, als Körperschallfilter ausgebildet sein, um die Übertragung von Restschwingungen der Einspannstelle 42 des Wandlers 16 auf die Abdeckung 36 und damit auf den massiven Teil des Leitungsrohres 12 weiter zu reduzieren.

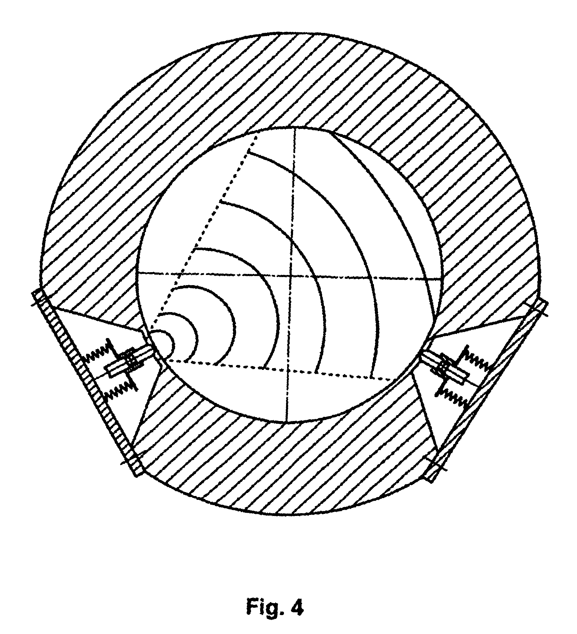

Im Gegensatz zu anderen Technologien können die Wandler durch die dünne Membran auch auf Pfadlage außerhalb des Durchmessers eingesetzt werden (Fig. 4). Das bedeutet, dass Messungen auch entlang außermittigen Pfaden durchgeführt werden können. Obwohl die erfindungsgemäßen Wandler durch den senkrechten Anbau in Richtung des Durchmessers abstrahlen, lassen sich aber trotzdem außermittige Messpfade aufspannen, da die Wandler einen Abstrahlkegel mit großer Öffnung ermöglichen, insbesondere bei kleiner dünner Membran. Zusätzlich können bei großem Abstrahlkegel mehr Messpfade aufgespannt werden, da einem Sender mehrere Empfänger zugeordnet sein können. Somit kann die Anzahl der Messpfade größer sein als die Anzahl der Ultraschallwandler dividiert durch zwei.

## Patentansprüche

1. Vorrichtung zum Messen der Strömungsgeschwindigkeit und/oder des Durchflusses eines Fluids mittels Ultraschall, mit wenigstens zwei an einer Außenseite einer Wandung (14) eines ein Messgehäuse bildenden Fluid-Leitungsrohres (12) angeordneten Ultraschall erzeugenden bzw. Ultraschall aufnehmenden Elementen (22), **dadurch gekennzeichnet, dass** die Elemente (22) Teile von Ultraschallwandlern (16) vom Längsschwingertyp sind, wobei jeder Ultraschallwandler eines der den Ultraschall erzeugenden bzw. aufnehmenden Elemente (22), eine den Ultraschall abstrahlende bzw. aufnehmende Membran (30) und einen dazwischen angeordneten, separaten Wellenleiter (26) aufweist und wobei ein mit der Wandung (14) einstückiger Teilbereich (32) der Wandung (14) die Membran (30) des Ultraschallwandlers (16) bildet und wobei ein Kontaktbereich (44) zwischen dem Wellenleiter (26) und dem die Membran (30) bildenden Wandteilbereich (32) formschlüssig und kugelförmig ausgebildet ist.

2. Vorrichtung nach einem der vorhergehenden Ansprüche, **dadurch gekennzeichnet, dass** der Wandteilbereich (32) gegenüber der restlichen Wandung (14) verdünnt ausgebildet ist.

3. Vorrichtung nach einem der vorhergehenden Ansprüche, **dadurch gekennzeichnet, dass** der Ultraschallwandler (16) zumindest teilweise in die Wand (14) eingelassen ist.

4. Vorrichtung nach einem der vorhergehenden Ansprüche, **dadurch gekennzeichnet, dass** der in die Wand (14) eingelassene Ultraschallwandler (16) mittels einer Abdeckung (36) abgedeckt ist.

5. Vorrichtung nach einem der vorhergehenden Ansprüche, **dadurch gekennzeichnet, dass** der Ultraschallwandler (16) mittels eines Federelements (40) an die die Membran (30) bildende Wandung (32) angepresst ist.

6. Vorrichtung nach einem der vorhergehenden Ansprüche, **dadurch gekennzeichnet, dass** das Federelement (40) sich gegen die Abdeckung (36) abstützt.

7. Vorrichtung nach einem der vorhergehenden Ansprüche, **dadurch gekennzeichnet, dass** die Ultraschallwandler derart angeordnet sind, dass die entsprechenden Messpfade außerhalb des Durchmessers liegen.

## Claims

1. Device for measuring the flow velocity and/or the flow of a fluid by means of ultrasound, having at least two elements (22) arranged on an outside wall (14) of a fluid pipeline (12) forming a measuring housing and generating ultrasound and picking up ultrasound, **characterized in that** the elements (22) are parts of ultrasonic transducers (16) of the longitudinal vibrator type, each transducer of one of the elements (22) generating or picking up the ultrasound having a diaphragm (30) emitting or picking up the ultrasound and a separate waveguide (26) arranged between them, and a subregion (32) of the wall (14), in one piece with the wall (14), forming the diaphragm (30) of the ultrasonic transducer (16), and a contact region (44) between the waveguide (26) and the subregion (32) of the wall forming the diaphragm (30) being formed with a form fit and spherically.

2. Device according to one of the preceding claims, **characterized in that** the subregion (32) of the wall is thinned as compared with the remaining wall (14).

3. Device according to one of the preceding claims, **characterized in that** the ultrasonic transducer (16) is at least partly let into the wall (14).

4. Device according to one of the preceding claims, **characterized in that** the ultrasonic transducer (16) let into the wall (14) is covered by means of a cover (36).

5. Device according to one of the preceding claims, **characterized in that** the ultrasonic transducer (16) is pressed against the wall (32) forming the diaphragm (30) by means of a spring element (40).

6. Device according to one of the preceding claims, **characterized in that** the spring element (40) is supported against the cover (36).

7. Device according to one of the preceding claims, **characterized in that** the ultrasonic transducers are arranged in such a way that the corresponding measuring paths lie outside the diameter.

## Revendications

1. Dispositif de mesure de la vitesse d'écoulement et/ou du débit d'un fluide au moyen d'ultrasons, avec au moins deux éléments (22) générant les ultrasons et/ou recevant les ultrasons disposés sur un côté extérieur d'une paroi (14) d'une conduite de fluide (12) formant un boîtier de mesure, **caractérisé en ce que** les éléments (22) sont des parties de transducteurs d'ultrasons (16) du type oscillateur longitudinal, chaque transducteur d'ultrasons d'un des éléments générant et/ou recevant les ultrasons (22) comprenant une membrane (30) émettant et/ou recevant les ultrasons et un guide d'ondes (26) séparé, disposé entre ceux-ci, et une zone partielle (32) de la paroi (14), solidaire de la paroi (14), formant la membrane (30) du transducteur d'ultrasons (16) et une zone de contact (44) étant conçue par engagement positif et en forme de sphère entre le guide d'ondes (26) et la zone partielle de paroi (32) formant la membrane (30).

2. Dispositif selon l'une des revendications précédentes, **caractérisé en ce que** la zone partielle de paroi (32) est conçue en étant amincie par rapport au reste de la paroi (14).

3. Dispositif selon l'une des revendications précédentes, **caractérisé en ce que** le transducteur d'ultrasons (16) est encastré au moins en partie dans la paroi (14).

4. Dispositif selon l'une des revendications précédentes, **caractérisé en ce que** le transducteur d'ultrasons (16) encastré dans la paroi (14) est recouvert d'un couvercle (36).

5. Dispositif selon l'une des revendications précédentes, **caractérisé en ce que** le transducteur d'ultrasons (16) est pressé au moyen d'un élément formant ressort (40) contre la paroi (32) formant la membrane (30).

6. Dispositif selon l'une des revendications précédentes, **caractérisé en ce que** l'élément formant ressort (40) s'appuie contre le couvercle (36).

7. Dispositif selon l'une des revendications précédentes, **caractérisé en ce que** les transducteurs d'ultrasons sont disposés de telle sorte que les trajets de mesure correspondants se situent à l'extérieur du diamètre.
